(19) Europäisches Patentamt / European Patent Office / Office européen des brevets

(11) **EP 3 578 929 B1**

(12) **FASCICULE DE BREVET EUROPEEN**

(45) Date de publication et mention de la délivrance du brevet:
**24.03.2021 Bulletin 2021/12**

(21) Numéro de dépôt: **19178015.4**

(22) Date de dépôt: **04.06.2019**

(51) Int Cl.:
*G01D 5/245* (2006.01)   *F01D 5/28* (2006.01)
*F01D 17/06* (2006.01)   *F01D 21/00* (2006.01)
*F01D 21/04* (2006.01)   *G01M 5/00* (2006.01)
*G01M 15/14* (2006.01)

(54) **PROCÉDÉ ET SYSTÈME DE DÉTECTION DE LA POSITION ANGULAIRE DES AUBES D'UNE ROUE À AUBES D'UNE TURBOMACHINE**

**VERFAHREN UND SYSTEM ZUR BESTIMMUNG DER WINKELPOSITION DER LAUFRADSCHAUFELN EINES SCHAUFELRADS EINES TURBOTRIEBWERKS**

**METHOD AND SYSTEM FOR DETECTING THE ANGULAR POSITION OF THE BLADES OF AN IMPELLER OF A TURBINE ENGINE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2018 FR 1854923**

(43) Date de publication de la demande:
**11.12.2019 Bulletin 2019/50**

(73) Titulaire: **SAFRAN AIRCRAFT ENGINES**
**75015 Paris (FR)**

(72) Inventeurs:
• **GARNIER, Alméric Pierre Louis**
**77550 MOISSY-CRAMAYEL (FR)**
• **LHOMMEAU, Tony**
**77550 MOISSY-CRAMAYEL (FR)**
• **SALVI, Alexandre Jean Joseph**
**77550 MOISSY-CRAMAYEL (FR)**
• **COGNOT, Lorris Michel**
**77550 MOISSY-CRAMAYEL (FR)**
• **POIX, Thierry Raymond**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**EP-A1- 1 138 952**      **EP-A2- 2 781 897**
**WO-A1-02/16881**        **WO-A1-2016/062946**
**DE-A1- 19 818 799**     **DE-A1-102016 219 355**
**US-A1- 2012 148 400**

EP 3 578 929 B1

**Description**

Arrière-plan de l'invention

L'invention concerne le domaine de la surveillance d'un moteur d'aéronef et plus particulièrement, l'identification des aubes d'un aubage de manière individuelle, notamment pour la détection d'un éventuel endommagement ou de balourd sur une ou plusieurs aubes mobiles sur une roue à aubes d'un moteur d'aéronef.

Les soufflantes des nouvelles générations de moteur d'aéronef sont équipées d'aubes composites. L'intégration de ces aubes dans une soufflante permet une amélioration sensible des performances de celle-ci et un gain en masse non-négligeable.

Cependant, la surveillance de l'état de santé d'aubes composites s'avère complexe à mettre en œuvre.

Tandis que pour des aubes métalliques une simple inspection à l'œil nu permet de détecter directement un éventuel endommagement de celles-ci, un tel type de détection s'avère limitée pour des aubes composites. Par exemple, un choc sur une aube composite peut entraîner un délaminage et des dommages internes non-observables à l'œil nu et donc plus difficiles à détecter.

Les aubes composites étant des produits à forte valeur ajoutée, il est fortement souhaitable de pouvoir planifier en amont une maintenance conditionnelle de celles-ci afin de réduire les délais et coûts de la maintenance au sol de l'aéronef. La planification de cette maintenance requiert donc une détection et une identification performantes de tout dommage éventuel d'une aube.

Une méthode de détection d'endommagement d'aube connue consiste en l'utilisation de capteurs tip-timing. Ces capteurs détectent et comptent le passage des aubes par rapport à une base de temps. Les mesures des capteurs tip-timing sont ensuite utilisées pour calculer la fréquence propre de chaque aube, la fréquence propre donnant une information sur l'état de santé de l'aube.

L'identification des aubes d'un aubage de manière individuelle est primordiale aussi bien pour l'équilibrage des aubages que pour les fonctions de surveillance de l'état de santé des aubages. Cette identification se fait par la détection de l'information dite du « Top-Tour ».

Le Top-Tour est un point de référence fixe, comme par exemple un carter moteur, vis-à-vis d'un élément en rotation, comme par exemple un arbre basse pression ou un arbre haute pression.

Cette position permet de connaître la position angulaire de l'arbre basse pression vis-à-vis du carter (dans le repère fixe).

Les rotors de moteur d'aéronef nécessitent en effet d'être équilibrés afin d'assurer le bon respect de limites vibratoires sur le moteur. Pour ce faire, il est nécessaire de compenser le balourd, ou déséquilibre, mesuré, en positionnant une ou plusieurs masses à des positions angulaires précises dans le repère fixe. Le top par tour permet alors de définir les positions d'accroche de ces masses. L'identification faite par un homme doit être concordante avec celle faite par la machine (système embarqué) qui est en support.

Usuellement, une méthode de détection du top-tour consiste en l'utilisation d'un capteur, dit de top-tour, qui détecte le passage de dentures, ou aubes, à son regard et particulièrement le passage d'une dent singulière de l'aubage (ici la roue dentée) à son regard. Cette roue dentée, appelée roue phonique, est caractérisée en ce qu'elle présente une singularité, qui peut être la présence d'un excédent ou d'un manque localisée de matière sur la roue. Cette anomalie est détectée par un moyen tel qu'un capteur capacitif ou un capteur à effet hall par exemple. La détection de cette anomalie permet de connaître la position angulaire de référence pour l'ensemble de la roue.

La roue phonique n'a pas de fonction autre que fournir cette référence angulaire et servir de point de mesure de la vitesse de rotation des parties tournantes à laquelle elle se rattache.

La roue phonique ne voit pas de flux. Elle n'a pas de fonction dite aérodynamique et ne participe donc pas à la propulsion du moteur.

Cependant, cette roue phonique a un impact à la fois sur la masse de l'aéronef, et ce d'autant plus lorsqu'elle est en rotation, et sur l'intégration étant donné qu'on ajoute cette pièce spécifique sur l'arbre basse pression du moteur et qu'il est nécessaire d'intégrer le capteur jusqu'à la roue phonique, notamment avec des difficultés liées aux tolérances de mise en œuvre.

Il serait donc avantageux de ne pas intégrer de roue phonique et d'obtenir l'information du top-tour avec un autre procédé.

Il est connu du document US 2012/148400 une détection du top-tour à partir d'une détection d'une singularité sur une aube d'un aubage autre que sur la roue phonique afin de pouvoir s'en abstraire.

Il est également connu du document EP 2 661 611 un système de remplacement de la mesure de vitesse fait via la roue phonique. Lorsque l'arbre est sectionné, la roue phonique située en amont de la rupture ne peut plus traduire la vitesse de rotation de la turbine. Cette information est primordiale pour la régulation de sorte que la turbine n'entre pas en survitesse.

Dans ce procédé, pour obtenir l'information, une aube doit avoir un profil différent afin de pouvoir générer un profil de pression différent.

Il est en outre connu du document US 8 528 317, une méthode de surveillance de FOD sur un turbo fan utilisant l'information de top-tour : « beep per turn », de la roue phonique.

Il est également connu une méthode d'identification d'un top-tour via la différence de répartition des dents d'une roue phonique. En effet, la différence de proximité va avoir une influence sur le temps de passage détecté par le capteur de top tour. Par traitement algorithmique, cette singularité dans les deltas de temps permet d'identifier la singularité de la répartition de l'aubage et donc d'identifier une référence angulaire.

L'ensemble des solutions connues et mentionnées ci-dessus proposent de réaliser le top tour en réalisant une singularité sur un aubage ou une roue phonique.

L'introduction d'une aube singulière dans la turbomachine, ce qui présente différents inconvénients comme la nécessité de développer une pièce spécifique, ainsi que de prévoir une gestion de production d'aubes différentes, entraîne un comportement différent de celle-ci par rapport aux autres aubes de la turbomachine. Des problématiques de certification de la turbomachine, de gestion des stocks et une complexification de la maintenance de la turbomachine, ainsi que des perturbations aérodynamiques et vibratoires de par la singularité de l'aube singulière, et donc une dégradation des performances, existent alors.

Les procédés connus décrits ci-dessus ont également pour inconvénient de générer un positionnement d'une aube de façon non équi-réparties, c'est-à-dire angulairement non régulière par rapport aux autres aubes. Il est possible d'avoir une répartition non équi-répartie des aubes sur un aubage, mais cela entraînerait également des contraintes de fabrication et des perturbations aérodynamiques ayant un impact négatifs sur les performances du moteur.

Les procédés connus décrits ci-dessus ont également pour inconvénient que les capteurs doivent avoir une bande passante adéquate à la détection du passage de toutes les aubes, pour l'ensemble des plages de régime adoptées. En effet, si le régime est trop grand ou bien si le nombre d'aubes est trop important, un capteur capacitif ne pourra plus distinguer les aubes, et il faudra utiliser un capteur optique par exemple

Les documents WO2016/062946 A1, US2012/148400 A1, EP2781897 A2, DE102016219355 A1 et EP1138952 A1 sont des exemples connus de détection de la position angulaire des aubes d'une roue de turbomachine.

Les documents DE19818799 A1 et WO02/16881 A1 sont des exemples connus de détection de la position angulaire à l'aide du principe de Vernier, connu en soi, dans le domaine automobile pour la détection angulaire d'une colonne de direction.

Objet et résumé de l'invention

L'invention vise à pallier les inconvénients mentionnés ci-dessus et à passer outre les difficultés mentionnées ci-dessus en proposant une détection de la position angulaire des aubes d'une roue à aubes d'une turbomachine en l'absence d'une roue phonique.

Un objet de l'invention propose un procédé de détection de la position angulaire des aubes d'une roue à aubes d'une turbomachine, la turbomachine comprenant au moins deux roues à aubes traversées chacune par un flux d'air et couplées directement ou indirectement l'une à l'autre, la première roue comprenant un premier nombre d'aubes et la seconde roue comprenant un second nombre d'aubes,

Selon une caractéristique générale de l'invention, le procédé comprend une détection du passage de chaque aube de la première roue par un premier capteur, une détection du passage de chaque aube de la seconde roue par un second capteur, un calcul de l'intervalle de temps séparant le passage d'une aube de la première aube de chacune des aubes de la seconde roue, et une détermination de la position angulaire relative de chaque aube de la première aube par rapport à la position angulaire des aubes de la seconde roue, le premier nombre d'aubes de la première roue et le second nombre d'aubes de la seconde roue étant distincts et premiers entre eux.

L'objet de l'invention permet ainsi de détecter la position angulaire des aubes d'une roue à aubes d'une turbomachine en l'absence d'une roue phonique, ce qui permet un gain en masse tournante et en encombrement, ou d'une singularité sur une aube de la roue, ce qui permet d'éviter d'introduire une perturbation aérodynamique dans le flux de la turbomachine. Cette détection est réalisée en utilisant les informations temporelles de deux aubages qui n'ont pas le même nombre d'aubes.

Cette détection peut être réalisée aussi bien lorsque l'aéronef est au sol que lorsqu'il est en vol.

L'invention utilise de manière avantageuse les aubages déjà présents sur l'arbre de la turbomachine et dédiés à la propulsion. La comparaison du signal temporel entre les deux aubages permet ainsi d'obtenir une référence angulaire de type top/tour. En effet, il est ainsi possible de former une référence angulaire à partir du calage des aubes des deux roues mobiles relativement entre elles.

Plus particulièrement, la comparaison du temps de passage des aubes de la première roue à aubes avec le temps de passage des aubes de la seconde roue à aubes consécutivement permet de repérer un motif, c'est-à-dire une signature. Cette signature permet d'identifier chaque aube en particulier et de la définir comme étant le Top-Tour.

Dans un premier aspect du procédé de détection de la position angulaire, le procédé peut en outre comprendre la détermination de la vitesse de rotation de l'arbre ou des arbres entraînant les deux roues à aubes, la détermination de la position angulaire relative tenant compte de la ou des vitesse(s) de rotation déterminée(s).

La signature varie en fonction du régime de l'arbre. Les écarts étant liés à la répartition des aubes, ils sont normalisables par la vitesse de rotation à nombre d'aubes connu. Aussi la logique de détection du Top-Tour n'est pas dépendante de la vitesse de rotation de l'arbre en ce sens.

Dans un deuxième aspect du procédé de détection de la position angulaire, les capteurs sont synchronisés sur une même base temporelle pour permettre d'améliorer la précision de mesure des intervalles de temps de détection de passage des aubes.

Dans un troisième aspect du procédé de détection de la position angulaire, le procédé peut en outre comprendre une surveillance de la torsion de l'arbre, la détermination de la position angulaire relative tenant compte de ladite torsion déterminée.

La prise en compte de la torsion de l'arbre dans la détermination de la position angulaire relative des aubes permet de réduire les perturbations sur les mesures temporelles dans le cas où l'arbre subirait des déformations non négligeables.

Un autre objet de l'invention propose un procédé de détection d'un endommagement d'une ou plusieurs aubes mobiles constitutives d'une roue à aubes d'un moteur d'aéronef, le procédé comprenant une détection de la position angulaire des aubes d'une roue telle que définie ci-dessus.

Le procédé de détection d'un endommagement d'une ou plusieurs aubes mobiles constitutives d'une roue aubagée peut comprendre une mesure du régime du moteur, et pour chaque aube mobile, les étapes suivantes :

- une acquisition de mesures relatives au temps de passage du sommet de l'aube mobile au droit d'une zone de référence de la roue aubagée ;
- un calcul d'une déflexion au sommet de l'aube mobile à partir desdites mesures et du régime du moteur ;
- une extraction d'une composante dynamique de la déflexion calculée ;
- une détermination d'une variation de comportement dynamique de l'aube mobile à partir de la composante dynamique extraite ;
- une comparaison de la variation de comportement dynamique déterminée à un premier seuil de variation, le premier seuil de variation étant lié à un deuxième seuil de variation d'une fréquence propre de l'aube mobile relatif à un seuil d'endommagement de l'aube mobile ; et
- une identification d'un endommagement de l'aube mobile lorsque ladite variation de comportement dynamique est supérieure ou égale au premier seuil de variation.

Un autre objet de l'invention propose une turbomachine comprenant une première et une second roues à aubes traversées chacune par un flux d'air et couplées directement ou indirectement l'une à l'autre la première roue comprenant un premier nombre d'aubes et la seconde roue comprenant un second nombre d'aubes,

Selon une caractéristique générale de l'invention, la turbomachine comprend en outre un système de détection de la position angulaire des aubes des première et seconde roues à aubes, le système comprenant au moins un premier capteur associé à la première roue à aubes et au moins un second capteur associé à la seconde roue à aubes, lesdits capteurs étant chacun configurés pour générer un signal à chaque passage d'une aube d'une roue à aubes devant le capteur, et une unité de traitement configurée pour déterminer l'intervalle de temps séparant la détection d'une aube de la première roue avec la détection de chacune des aubes de la seconde roue, le premier nombre d'aubes de la première roue et le second nombre d'aubes de la seconde roue étant distincts et premiers entre eux.

Dans un premier aspect de la turbomachine, la première et la deuxième roues peuvent être entraînées par un même arbre. L'entraînement est alors directe.

Dans un deuxième aspect de la turbomachine, la première et la deuxième roues peuvent être entraînées respectivement par un premier arbre et un second arbre, le premier arbre et le second arbre étant raccordé mécaniquement par le biais d'un dispositif de réduction. Les deux roues sont entraînées de manière indirecte par le même arbre.

Dans un troisième aspect de la turbomachine, le système de détection peut comprendre au moins deux capteurs sur chacune des première et seconde roues à aubes, chacune des deux roues à aubes étant associées à deux types de capteur différents, le type de capteur étant choisi notamment parmi les types optique, magnétique et capacitif.

Le couple de paramètres comprenant le nombre d'aube des disques et le régime de l'arbre conditionne la technologie de capteurs à utiliser pour assurer la bonne résolution sur l'acquisition des temps de passage et le distinguo des aubes détectées.

Dans un quatrième aspect de la turbomachine, le premier nombre d'aubes peut être au moins égal à deux et le seconde nombre d'aubes peut être au moins égal à trois.

Dans un cinquième aspect de la turbomachine, la turbomachine peut comprendre un module d'horloge sur lequel sont synchronisés les capteurs.

Dans un sixième aspect de la turbomachine, les capteurs possèdent de préférence une bande passante fréquentielle correspondant aux régimes de rotation de l'arbre pour lesquels les aubes sont détectées.

Un autre objet de l'invention propose un aéronef comprenant au moins une turbomachine telle que définie ci-dessus.

Brève description des dessins.

L'invention sera mieux comprise à la lecture faite ci-après, à titre indicatif mais non limitatif, en référence aux dessins annexés sur lesquels :

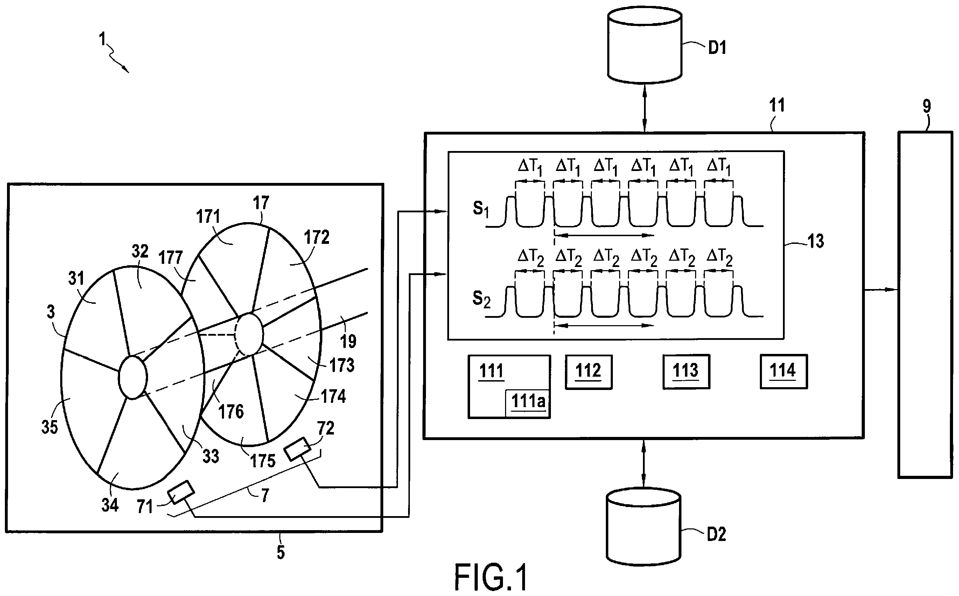

- la figure 1 illustre de manière schématique un système de détection d'un endommagement pour des aubes mobiles d'une roue aubagée d'un moteur d'aéronef doté d'un système de détection de la position angulaire relative des aubes des deux roues à aubes selon un premier mode de réalisation de l'invention ;

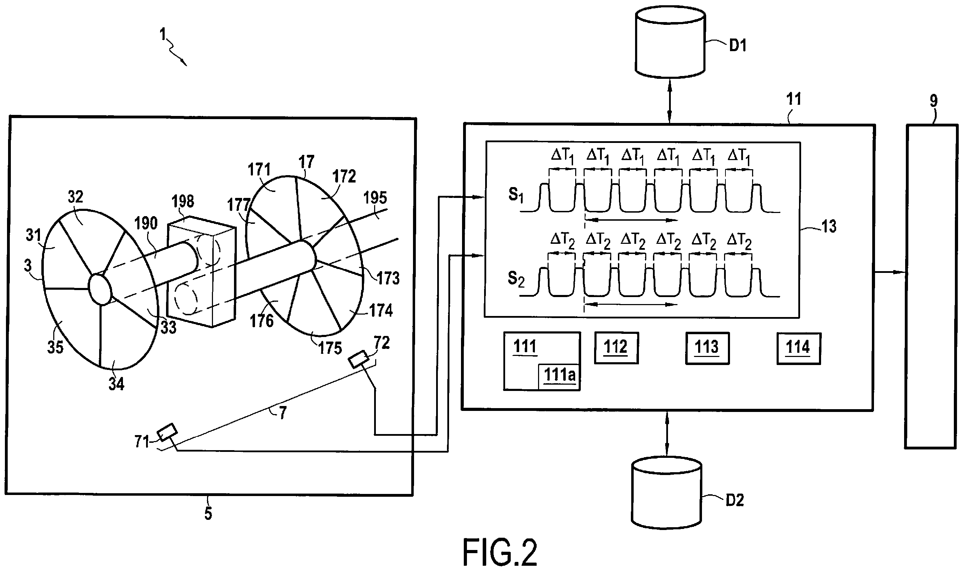

- la figure 2 illustre de manière schématique un système de détection d'un endommagement pour des aubes mobiles d'une roue aubagée d'un moteur d'aéronef doté d'un système de détection de la position angulaire relative des aubes des deux roues à aubes selon un deuxième mode de réalisation de l'invention ;

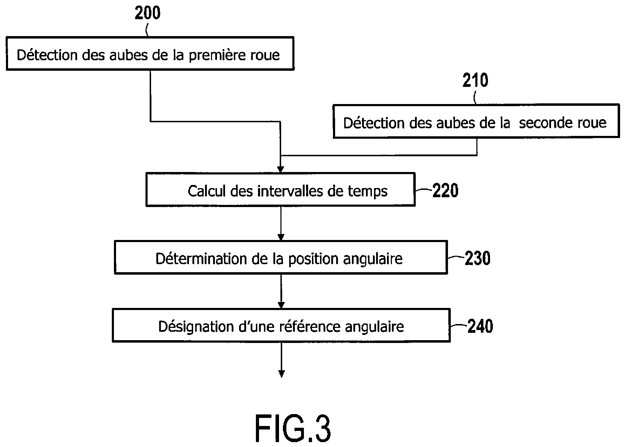

- la figure 3 présente un organigramme d'un procédé de détection de la position angulaire des aubes d'une roue à aubes d'une turbomachine ;

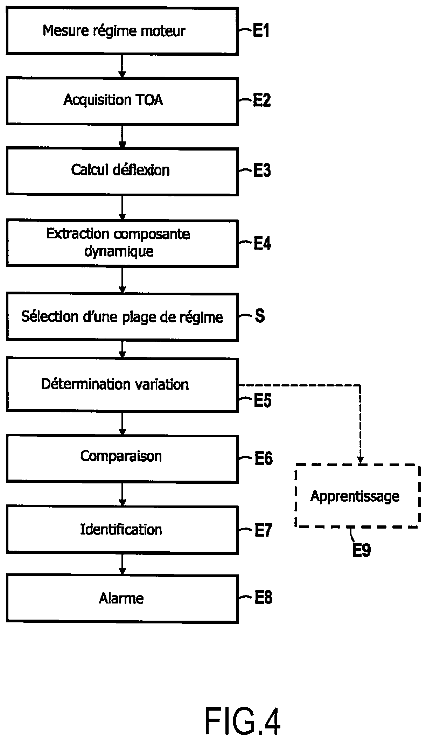

- la figure 4 présente un organigramme d'un procédé de détection d'un endommagement d'une ou plusieurs aubes mobiles constitutives d'une roue à aubes d'un moteur d'aéronef, le procédé comprenant une détection de la position angulaire des aubes d'une roue selon un mode de mise en œuvre de l'invention.

Description détaillée de modes de réalisation

La figure 1 illustre de manière schématique un système 1 de détection d'un endommagement pour des aubes mobiles d'une roue à aubes, ou roue aubagée (ou aubage), 3 d'une turbomachine 5, ou moteur, d'aéronef selon un premier mode de réalisation de l'invention.

Ce système 1 comporte des moyens d'acquisition 7 de données, des moyens d'alertes 9, et des moyens de traitement 11 tel qu'un calculateur ou un ordinateur comprenant notamment des moyens de calcul.

Les moyens de traitement 11 sont associés à des moyens de stockage se présentant sous la forme d'une ou plusieurs bases de données D1, D2. Les moyens de traitement 11 sont en outre configurés pour exécuter un programme d'ordinateur comprenant des instructions de code conçues pour mettre en œuvre un algorithme d'acquisition, de traitement de signal, d'analyse, et d'alerte selon le procédé de détection d'endommagement de l'invention.

Les moyens de traitement 11 peuvent être intégrés dans un boîtier spécifique ou dans un boîtier électronique existant. Par exemple, les moyens de traitement 11 peuvent faire partie du calculateur ou plus particulièrement, du dispositif de régulation numérique du moteur ECU (Engine Control Unit) ou du dispositif de suivi de l'état de santé moteur EMU (Engine Monitoring Unit).

Les moyens d'acquisition 7 sont notamment configurés pour acquérir un signal temporel S1 relatif à des aubes 31 à 35 mobiles d'une roue aubagée 3, par exemple la roue aubagée de la soufflante (Fan) ou de toute autre roue aubagée du moteur 5.

Avantageusement, les moyens d'acquisition 7 utilisent une technique de « tip-timing » pour mesurer les temps/instants de passage TOA (« Time Of Arrival ») des aubes 31 mobiles.

Les moyens d'acquisition 7 intégrés dans le moteur 5 d'aéronef en exploitation, comportent au moins un capteur tip-timing 71 installé sur le carter du moteur 5 au droit de la roue aubagée 3 de sorte à acquérir un signal temporel S1 propre au capteur 71.

Plus particulièrement, un capteur tip-timing 71 détecte et compte les passages des sommets des aubes 31 à 35 par rapport à une base de temps. Ainsi, un capteur tip-timing 71 peut mesurer le temps de passage courant entre les aubes 31 à 35 par rapport à un point de référence, aussi appelé « top-tour ». Pour un capteur tip-timing 71, les temps de passage (TOA) propres à chaque aube 31 à 35 peuvent ensuite être déduits des données mesurées par les moyens de traitement 11, ici via un module de calcul 13.

En d'autres termes, un capteur tip-timing 71 permet d'acquérir des mesures relatives aux temps/instants de passage du sommet de chaque aube 31 à 35 mobile au droit d'une zone de référence de la roue aubagée 3. Par ailleurs, dans le cas où plusieurs capteurs 71 sont utilisés sur une même roue à aubes, il est possible, afin de limiter les risques de pertes des capteurs tip-timing 71, de positionner les capteurs 71 de manière à maximiser leur distance azimutale, afin de les éloigner au maximum les uns des autres. Ainsi, en cas de défaillance locale d'un capteur 71 (ex : impact d'un débris sur une aube 31, encrassement d'un capteur 71) on minimise le risque que l'ensemble des capteurs 71 soient affectés.

En fonctionnement normal, les aubes 31 à 35 vont passer devant un même capteur tip-timing 71 de manière régulière. A un régime donné, on mesurera donc, pour un capteur 71, un intervalle de temps $\Delta t$ entre le passage de deux aubes consécutives .

A l'inverse, l'altération de l'état d'une aube, due par exemple à une usure ou à l'ingestion d'un corps étranger FOD (« Foreign Object Damage »), peut se traduire par une modification de la position de l'aube au moment où celle-ci passe devant au moins un des capteurs 71.

Afin de pouvoir identifier chaque aube 31 à 35, indépendamment de leur état, les moyens de traitement 11 sont configurés pour analyser les différents signaux temporels S1 par rapport à une référence angulaire.

La référence angulaire peut être fournie par un système de détection d'un « top-tour » selon un mode de réalisation de l'invention. Le système de détection d'un « top-tour » selon l'invention est un système de détection de la position angulaire relative des aubes d'une première roue à aubes, telle que la roue à aubes 3 dont l'endommagement des aubes est surveillé à l'aide des capteurs 71, et d'une seconde roue à aubes 17, la première et la seconde roues à aubes 3 et 17 étant traversées par un même flux d'air et, dans le mode de réalisation illustré sur la figure 1, entraînées par un même arbre 19 de la turbomachine 5.

L'endommagement des aubes de la seconde roue à aubes 17 peut être surveillé également de la même manière que pour la première roue à aubes 3 à l'aide d'autres capteurs tip-timing montés en regard de la seconde roue 17.

La première roue 3 comprend un premier nombre d'aubes $N_1$ et la seconde roue 17 comprend un second nombre d'aubes $N_2$, le premier nombre d'aubes $N_1$ de la première roue à aubes 3 et le second nombre d'aubes $N_2$ de la seconde roue à aubes 17 étant distincts et ne présentant aucun diviseur commun. Le premier et le second nombre d'aubes $N_1$ et $N_2$ sont donc premiers entre eux. Les aubes sont réparties régulièrement sur chacune des roues à aubes 3 et 17. Ainsi, sur une même roue à aubes 3 ou 17 deux aubes adjacentes sont séparées d'un même intervalle angulaire.

Le système de détection d'un « top-tour » comprend au moins un premier capteur 71 associé à la première roue à aubes 3 et au moins un second capteur 72 associé à la seconde roue à aubes 17. Dans l'exemple illustré sur la figure 1, le système de détection d'un « top-tour » comprend un premier capteur 71 et un second capteur 72. Le premier capteur 71 associé à la première roue à aubes 3 peut correspondre au capteur 71 utilisé par les moyens d'acquisition 7 du système 1 de détection d'un endommagement, ce qui permet de réduire la masse, l'encombrement ainsi que le coût de la turbomachine.

Les premier et second capteurs 71 et 72 sont synchronisés temporellement sur une même horloge et sont configurés pour générer un signal à chaque passage d'une aube de la première ou seconde roue à aubes 3 ou 17 devant le capteur correspondant 71 ou 72.

Le système de détection d'un « top-tour » comprend en outre une unité de traitement configurée pour déterminer l'intervalle de temps séparant la détection d'une aube de la première roue à aubes 3 avec la détection de chacune des aubes de la seconde roue à aubes 17. L'unité de traitement est confondue dans ce mode de réalisation avec les moyens de traitement 11 du système 1 de détection d'un endommagement.

Le premier capteur 71 embarqué renvoie un premier signal temporel S1 à chaque fois qu'une aube de la première roue à aubes 3 passe devant. Le second capteur 72 embarqué renvoie un second signal temporel S2 à chaque fois qu'une aube de la seconde roue à aubes 17 passe devant. L'intervalle de temps entre chaque détection, ∆T1 pour la première roue à aubes 3 et ∆T2 pour la seconde roue à aubes 17, dépend de la vitesse de rotation de l'arbre 19 et du nombre respectif d'aubes sur la roue à aubes 3 ou 17.

La figure 2 illustre de manière schématique un système 1 de détection d'un endommagement pour des aubes mobiles d'une roue à aubes 3 d'une turbomachine 5 d'aéronef selon un second mode de réalisation de l'invention.

Le second mode de réalisation illustré sur la figure 2 diffère du premier mode de réalisation illustré sur la figure 1 en ce que la première et seconde roues à aubes 3 et 17 sont traversées chacune par un flux d'air qui peut ne pas être le même et sont entraînées par deux arbres distincts 190 et 195 raccordés l'un à l'autre par un réducteur 198.

Le système de détection d'un top-tour met en œuvre un procédé correspondant présenté schématiquement sur l'organigramme de la figure 3.

Le procédé comprend une première étape 200 dans laquelle le premier capteur 71 détecte le passage de chaque aube 31 à 35 de la première roue à aubes 3.

Dans le même temps, dans une seconde étape 210, le second capteur 72 détecte le passage de chaque aube 171 à 177 de la seconde roue 17.

Dans une troisième étape 220, l'unité de traitement 11 calcule l'intervalle de temps ∆t séparant le passage d'une aube de la première aube 3 de chacune des aubes 171 à 177 de la seconde roue 17.

Ensuite, dans une quatrième étape 230, l'unité de traitement 11 détermine la position angulaire relative de chaque aube 31 à 35 de la première aube 3 par rapport à la position angulaire des aubes 171 à 177 de la seconde roue 17.

Enfin, dans une cinquième étape 240, l'unité de traitement 11 désigne comme référence angulaire, c'est-à-dire comme top-tour, l'aube de la première roue à aubes 3 présentant l'écart temporel ∆t le plus petit avec une aube de la seconde roue à aubes 17.

Dans une variante, le calcul de l'intervalle de temps peut être normalisé par rapport à la vitesse de rotation de l'arbre 19 entraînant les deux roues à aubes 3 et 17 de sorte que le calcul soit indépendant de la vitesse de rotation.

Dans une variante, le calcul de l'intervalle de temps prend en compte le coefficient de réduction du, si présent, dispositif de réduction 198.

Un disque fait $2\pi$ radians, aussi en faisant le lien avec la vitesse de rotation de l'arbre, on a :

$$1 \text{ tour} / \min = \frac{2\pi}{60} \text{ rad.s}^{-1}$$

Pour une vitesse de rotation fixe, notée RPM ci-dessous, l'intervalle de temps séparant le passage de deux aubes successives d'une même roue à aubes possédant un nombre N d'aubes devant un capteur associé à la roue à aubes se détermine par l'équation suivante :

$$\Delta t = \frac{60}{2\pi * RPM} * \frac{1}{N}$$

Pour la première roue à aubes 3 et le premier capteur 71 dédié à son regard, on a donc :

$$\Delta t_1 = \frac{60}{2\pi * RPM} * \frac{1}{N_1}$$

Et pour la seconde roue à aubes 17 et le second capteur 72 dédié à son regard, on a donc :

$$\Delta t_2 = \frac{60}{2\pi * RPM} * \frac{1}{N_2}$$

Les premiers et seconds capteurs n'auront donc pas le même nombre de détections de passage d'aubes dans un même tour d'arbre.

Dans le mode de réalisation illustré sur la figure 1, la première roue à aubes 3 comprend cinq aubes, soit $N_1$ =5, référencées 31 à 35, et la seconde roue à aubes 17 comprend 7 aubes, soit $N_2$ =7, référencées 171 à 177. Pour faciliter les calculs, on considère une vitesse de l'arbre égale à $60/2\pi$ tours par minute, soit RPM=$60/2\pi$ rpm.

Avec ces caractéristiques et en considérant que les capteurs ont la même position angulaire pour simplifier, on obtient le relevé des temps de passages des aubes suivants :

| Premier capteur 71 | Second capteur 72 |
|---|---|
| 0.100 | 0.050 |
| 0.300 | 0.192 |
| 0.500 | 0.335 |
| 0.700 | 0.478 |
| 0.900 | 0.621 |
| 1.100 | 0.764 |
| 1.300 | 0.907 |

Il est important de noter que les aubes ne sont pas forcément initialement au regard du capteur, ce qui introduit un délai avant la première détection.

Si on compare, dans le premier mode de réalisation illustré sur la figure 1 où les deux roues à aubes 3 et 17 sont entraînée par un même arbre 19, la différence du temps d'arrivée des aubes 31 à 35 de la première roue à aubes 3 avec le temps d'arrivée des aubes 171 à 177 de la seconde roue à aubes 17, on obtient cette matrice :

| Différence | 31 | 32 | 33 | 34 | 35 |
|---|---|---|---|---|---|
| 171 (tour 1) | 0.05 | 0.25 | 0.45 | 0.65 | 0.85 |
| 172 | -0.092 | 0.107 | 0.307 | 0.507 | 0.707 |

(suite)

| | | | | | |
|---|---|---|---|---|---|
| 173 | -0.235 | -0.035 | 0.164 | 0.364 | 0.564 |
| 174 | -0.378 | -0.178 | 0.021 | 0.221 | 0.421 |
| 175 | -0.521 | -0.321 | -0.121 | 0.078 | 0.278 |
| 176 | -0.664 | -0.464 | -0.264 | -0.064 | 0.135 |
| 177 | -0.807 | -0.607 | -0.407 | -0.207 | -0.007 |
| 171 (tour 2) | 0.05 | 0.25 | 0.45 | 0.65 | 0.85 |

Si on compare, dans le second mode de réalisation illustré sur la figure 2 où les deux roues à aubes 3 et 17 ne sont pas situées sur un même arbre mais entraînées par deux arbres distincts 190 et 195 couplées ensemble via un dispositif de réduction 198 de facteur $C_{réducteur}$ tels que :

Pour la première roue à aubes 3 et le premier capteur 71 dédié à son regard, on a donc :

$$\Delta t_1 = \frac{60}{2\pi * C_{réducteur} * RPM} * \frac{1}{N_1}$$

Et pour la seconde roue à aubes 17 et le second capteur 72 dédié à son regard, on a donc :

$$\Delta t_2 = \frac{60}{2\pi * RPM} * \frac{1}{N_2}$$

La différence de $C_{réducteur}$ fois le temps d'arrivée des aubes 31 à 35 de la première roue à aubes 3 avec le temps d'arrivée des aubes 171 à 177 de la seconde roue à aubes 17, on obtient la même matrice.

La table matricielle offre autant de références angulaires que souhaitées. Comme indiqué dans la table matricielle, les aubes d'une roue à l'autre ne sont pas nécessairement alignées n'ont plus. Si deux roues à aubes sont alignées de manière à avoir une aube de chaque roue à aubes alignée alignées ensemble, on aurait une case du tableau pour laquelle la différence serait nulle.

Une telle base de données peut alors être exploitée par un algorithme.

Dans l'exemple illustré sur les figures 1 et 2 et les tableaux ci-dessus, ce sont les deux dernières aubes 35 et 177 à être détectées pour la fin d'un tour qui présentent l'écart temporel Δt le plus petit. Mais ce résultat reste aléatoire car il est lié à l'offset de décalage de la première détection. La différence d'offset entre les deux roues à aubes 3 et 17 sera liée quant à elle au montage des première et seconde roues à aubes 3 et 17 sur l'arbre 19, et à la position angulaire des premier et second capteurs 71 et 72. Cet offset relève donc de la production et de l'assemblage de la turbomachine 5.

Avec un alignement des premier et second capteurs 71 et 72 à la même référence angulaire, l'offset est uniquement lié à l'assemblage des roues à aubes 3 et 17 sur l'arbre 19 et à leur alignement relatif.

Cet offset est caractéristique de la turbomachine 5, et l'alignement résultant entre les aubes d'une roue à aubes à l'autre est inhérent à la turbomachine 5. Cet alignement, ici est présenté relativement au temps de passage des aubes au regard d'un capteur Tip Timing, qui est finalement la signature temporelle de cet alignement des aubes.

Comme mentionné ci-dessus, la cinquième aube 35 de la première roue à aubes 3 et la septième aube 177 de la seconde roue à aubes 17 sont les plus alignées.

Cette particularité d'alignement permet de décider de manière arbitraire, que la cinquième aube 35 de la première roue à aubes 3 sera considérée comme le Top Tour, c'est-à-dire comme la référence angulaire. Une autre aube de la première roue aubes 3 aurait pu être désignée arbitrairement comme le top-tour basé sur l'analyse du tableau matriciel ci-dessus.

L'alignement des aubes d'une roue à aubes à l'autre reste identique, car il est lié à l'assemblage, et au nombre d'aubes respectives des roues à aubes. L'identification du top-tour ne nécessite qu'un tour pour être identifié par l'algorithme déployé.

Ainsi, à chaque vol de l'aéronef comprenant une turbomachine 5, le premier tour du moteur 5 permet de reconstituer le Top-Tour. Ensuite chaque détection de l'aube choisie comme top-tour donnera la référence temporelle, au sens du tip-timing, et angulaire du top-tour.

Le système 1 de détection d'endommagement d'une aube cherche à détecter une dégradation durable des performances d'une ou plusieurs aubes 31 à 35 liée à un endommagement, et non pas une simple perturbation temporaire observable sur le signal S1. Ainsi, la référence angulaire (top tour T12) décrite ci-dessus est uniquement utilisée pour identifier chacune des aubes 31 à 35 par rapport aux autres. La détection de l'endommagement d'une aube, qui sera décrite par la suite, ne consiste donc pas ici en la simple observation ou détection de la variation de l'intervalle Δt entre les impulsions mesurées entre les aubes 31 par chaque capteur tip-timing 71.

Au moins un capteur tip-timing 71 peut être utilisé pour mesurer le régime du moteur 5 de l'aéronef.

Chaque capteur tip-timing 71 peut être de type capacitif, inductif, à courants de Foucault, ou encore une sonde optique ces différents types de capteurs étant robustes, précis et peu encombrants.

Un exemple de mise en œuvre d'un procédé de détection de l'endommagement d'une ou plusieurs aubes 31 mobiles constitutives de la roue aubagée est maintenant décrit.

Comme illustré sur la Figure 4, ce procédé comprend une étape de mesure E1 du régime du moteur 5 réalisée par les moyens d'acquisition 7. Comme expliqué ci-dessus, la mesure du régime du moteur 5 peut être réalisée par le capteur tip-timing 71.

Parallèlement, le capteur tip-timing 71 effectue des mesures relatives aux temps/instants de passage du sommet de chaque aube mobile au droit du capteur. Les moyens de traitement 11 effectuent alors un conditionnement des mesures issues du capteur tip-timing 71. Ce conditionnement consiste à identifier en temps réel chaque aube dans le signal temporel mesuré à l'aide d'une référence angulaire, extraire du signal temporaire le temps de passage (TOA) relatif à une aube identifiée, associer à l'aube identifiée son temps de passage extrait ainsi qu'une information relative à son numéro de tour (étape E2).

Pour chaque acquisition d'un temps de passage (TOA) d'une aube, les moyens de traitement 11 calculent, via le module de calcul 13, une déflexion au sommet de cette aube (étape E3), c'est-à-dire l'écart spatial du sommet de l'aube 31 par rapport à une position théorique de celle-ci au repos.

Ensuite, au cours d'une étape E4, les moyens de traitement 11 extraient, via un module d'extraction 111 illustré sur la figure 1, la composante dynamique pour chaque déflexion calculée, c'est-à-dire l'isolent de la composante statique. L'extraction de la composante dynamique est réalisée à l'aide de méthodes d'isolation connues de l'état de l'art (ex : moyenne, ou utilisation d'un filtre passe haut pour extraire une composante haute fréquence).

Les moyens de traitement 11 réalisent en outre, via un module de sélection 112, une étape de sélection S d'une ou plusieurs plages de régime du moteur 5 pour lesquelles l'ensemble des aubes de la roue aubagée 3 sont supposées synchrones, c'est-à-dire supposées présenter un même comportement vibratoire pour une même plage de régime du moteur 5. Les plages de régime du moteur 5 sont ici pré-identifiées par rapport à une base de données de référence, par exemple la base de données D1, comme garantissant que l'ensemble des aubes présentent un même comportement vibratoire lorsqu'elles passent au droit du capteur tip-timing 71.

En vue d'identifier un éventuel endommagement d'une ou plusieurs aubes pour chaque plage de régime du moteur 5 sélectionnée au cours de l'étape de sélection S, les moyens de traitement 11 comprennent en outre un module de traitement 113 prenant pour entrées les composantes dynamiques sélectionnées par le module de sélection 112.

Le module de traitement 113 est configuré pour déterminer (étape E5) une éventuelle variation du comportement dynamique de chaque aube, en déterminant une variation des composantes dynamiques de chaque aube, et en mettant ces variations en relation avec une base de données référentielle. Les résultats de l'étape de détermination E5 sont de plus ajoutés à la base de données de suivi, ici la base de données D2. Ainsi, l'étape de détermination E5 peut être vue comme une étape d'analyse du comportement dynamique vibratoire de chaque aube pour chaque plage de régime du moteur sélectionnée au cours de l'étape de sélection S.

Les moyens de traitement 11 procèdent ensuite, via un comparateur 114, à une étape de comparaison E6 suite à l'étape de détermination E5. L'étape de comparaison E6 consiste à comparer chaque variation détectée d'une composante dynamique de la déflexion d'une aube 31, c'est-à-dire chaque variation de son comportement dynamique, avec un ou plusieurs seuils préenregistrés dans la base de données D1 référentielle.

Au cours de cette étape E6, chaque variation de composante dynamique, donc de comportement dynamique, détectée pour une aube 31 est notamment comparée à un premier seuil de variation, qui correspond indirectement à un état de santé de l'aube. Ce premier seuil est lié à un deuxième seuil qui concerne la variation de la fréquence propre de l'aube 31, l'atteinte de ce seuil correspondant à un endommagement de l'aube 31.

Les premier et deuxième seuils sont été déterminés puis enregistrés dans la base de données D1 référentielle au cours d'une phase d'apprentissage E9 initiale.

La détection d'une variation de la composante dynamique de la déflexion de l'aube 31, c'est à dire la variation de son comportement dynamique, est donc ici liée à la détection indirecte d'une dérive de la fréquence propre de cette aube 31, cette dérive au-delà d'un seuil prédéterminé traduisant un endommagement de celle-ci.

Ainsi, si la variation de la composante dynamique de la déflexion/du comportement dynamique de l'aube 31 est supérieure au premier seuil de variation, cela signifie que la fréquence propre de l'aube 31 présente elle-même une dérive traduisant un endommagement de l'aube 31. En effet, un endommagement de l'aube 31 conduit à une dérive de sa fréquence propre et donc à une dérive de la composante dynamique de sa déflexion.

Par conséquent, lorsque le comparateur 114 détecte que la variation de la composante dynamique de la déflexion/du comportement dynamique de l'aube 31 est supérieure ou égale au premier seuil, l'aube 31 est identifiée (étape E7) comme endommagée.

Une alarme indiquant l'endommagement de l'aube 31 est alors émise (étape E8) à destination des moyens d'alertes 9 (via par exemple, des moyens sonores et/ou de visualisation). De même, des messages à envoyer ou à tenir à disposition de la maintenance peuvent être déclenchés au cours de l'émission de l'alarme.

## Revendications

1. Procédé de détection de la position angulaire des aubes d'une roue à aubes d'une turbomachine (5), la turbomachine (5) comprenant au moins deux roues à aubes (3, 17) traversées chacune par un flux d'air et couplées directement ou indirectement l'une à l'autre, la première roue (3) comprenant un premier nombre d'aubes (31 à 35) réparties régulièrement sur la circonférence et la seconde roue (17) comprenant un second nombre d'aubes (171 à 177) réparties régulièrement sur la circonférence,
   **caractérisée en ce qu'**il comprend une détection (200) du passage de chaque aube (31 à 35) de la première roue (3) par un premier capteur (71), une détection (210) du passage de chaque aube (171 à 177) de la seconde roue (17) par un second capteur (72), un calcul (220) de l'intervalle de temps séparant le passage d'une aube de la première roue (3) de chacune des aubes (171 à 177) de la seconde roue (17), et une détermination (230) de la position angulaire relative de chaque aube (31 à 35) de la première aube (3) par rapport à la position angulaire des aubes (171 à 177) de la seconde roue (17), le premier nombre d'aubes de la première roue (3) et le second nombre d'aubes de la seconde roue (17) étant distincts et premiers entre eux.

2. Procédé selon la revendication 1, comprenant en outre la détermination de la vitesse de rotation de l'arbre (19) ou des arbres (190, 195) entraînant les deux roues à aubes (3, 17), la détermination de la position angulaire relative tenant compte de la ou des vitesse(s) de rotation déterminée(s).

3. Procédé selon l'une des revendications 1 ou 2, dans lequel les capteurs sont synchronisés sur une même base temporelle.

4. Procédé selon l'une des revendications 1 à 3, comprenant en outre une surveillance de la torsion de l'arbre, la détermination de la position angulaire relative tenant compte de ladite torsion déterminée.

5. Procédé de détection d'un endommagement d'une ou plusieurs aubes (31) mobiles constitutives d'une roue à aubes (3) d'un moteur (5) d'aéronef, le procédé comprenant une détection de la position angulaire des aubes d'une roue selon l'une des revendications 1 à 4.

6. Turbomachine (5) comprenant une première et une seconde roues à aubes (3, 17) traversées chacune par un flux d'air et couplées directement ou indirectement l'une à l'autre, la première roue (3) comprenant un premier nombre d'aubes (31 à 35) et la seconde roue (17) comprenant un second nombre d'aubes (171 à 177),
   **caractérisé en ce qu'**elle comprend en outre un système de détection de la position angulaire des aubes des première et seconde roues à aubes (3, 17), le système comprenant au moins un premier capteur (71) associé à la première roue à aubes (3) et au moins un second capteur (72) associé à la seconde roue à aubes (17), lesdits capteurs (71, 72) étant chacun configurés pour générer un signal ($S_1$, $S_2$) à chaque passage d'une aube d'une roue à aubes devant le capteur, et une unité de traitement (11) configurée pour déterminer l'intervalle de temps séparant la détection d'une aube (31 à 35) de la première roue (3) avec la détection de chacune des aubes (171 à 177) de la seconde roue (17),
   le premier nombre d'aubes de la première roue (3) et le second nombre d'aubes de la seconde roue (17) étant distincts et premiers entre eux.

7. Turbomachine (5) selon la revendication 6, dans lequel le système de détection comprend au moins deux capteurs sur chacune des première et seconde roues à aubes, chacune des deux roues à aubes étant associées à au moins deux types de capteur différents, le type de capteur étant choisi notamment parmi les types optique, magnétique et capacitif.

8. Turbomachine (5) selon l'une des revendications 6 ou 7, dans lequel le premier nombre d'aubes est au moins égal à deux et le seconde nombre d'aubes est au moins égal à trois.

9. Turbomachine (5) selon l'une des revendications 6 à 8, comprenant un module d'horloge sur lequel sont synchronisés les capteurs.

**10.** Turbomachine (5) selon l'une des revendications 6 à 9, dans lequel les capteurs possèdent une bande passante fréquentielle correspondant aux régimes de rotation de l'arbre pour lesquels les aubes sont détectées.

**11.** Aéronef comprenant au moins une turbomachine (5) selon l'une des revendications 6 à 10.

**Patentansprüche**

**1.** Verfahren zur Bestimmung der Winkelposition der Laufradschaufeln eines Schaufelrads eines Turbotriebwerks (5), wobei das Turbotriebwerk (5) mindestens zwei Schaufelräder (3, 17) umfasst, die jeweils von einem Luftstrom durchquert werden und direkt oder indirekt aneinander gekoppelt sind, wobei das erste Rad (3) eine erste Anzahl von Laufradschaufeln (31 bis 35) umfasst, die gleichmäßig auf dem Umfang verteilt sind, und das zweite Rad (17) eine zweite Anzahl von Laufradschaufeln (171 bis 177) umfasst, die gleichmäßig auf dem Umfang verteilt sind, **dadurch gekennzeichnet, dass** es eine Bestimmung (200) des Passierens jeder Laufradschaufel (31 bis 35) des ersten Rades (3) durch einen ersten Sensor (71), eine Bestimmung (210) des Passierens jeder Laufradschaufel (171 bis 177) des zweiten Rades (17) durch einen zweiten Sensor (72), eine Berechnung (220) des Zeitintervalls, das das Passieren einer Laufradschaufel des ersten Rades (3) von jeder der Laufradschaufeln (171 bis 177) des zweiten Rades (17) trennt, und eine Bestimmung (230) der relativen Winkelposition jeder Laufradschaufel (31 bis 35) der ersten Laufradschaufel (3) in Bezug auf die Winkelposition der Laufradschaufeln (171 bis 177) des zweiten Rades (17), wobei die erste Anzahl von Laufradschaufeln des ersten Rades (3) und die zweite Anzahl von Laufradschaufeln des zweiten Rades (17) untereinander verschieden und Primzahlen sind.

**2.** Verfahren nach Anspruch 1, umfassend ferner die Ermittlung der Rotationsgeschwindigkeit der Welle (19) oder der Wellen (190, 195), die die zwei Schaufelräder (3, 17) antreiben, wobei die Ermittlung der relativen Winkelposition die ermittelte(n) Rotationsgeschwindigkeit(en) berücksichtigt.

**3.** Verfahren nach einem der Ansprüche 1 oder 2, wobei die Sensoren auf derselben Zeitbasis synchronisiert sind.

**4.** Verfahren nach einem der Ansprüche 1 bis 3, umfassend ferner eine Überwachung der Torsion der Welle, wobei die Ermittlung der relativen Winkelposition die ermittelte Torsion berücksichtigt.

**5.** Verfahren zur Bestimmung einer Beschädigung einer oder mehrerer beweglicher Laufradschaufeln (31), die ein Schaufelrad (3) eines Motors (5) eines Luftfahrzeugs bilden, wobei das Verfahren eine Bestimmung der Winkelposition der Laufradschaufeln eines Rades nach einem der Ansprüche 1 bis 4 umfasst.

**6.** Turbotriebwerk (5), umfassend ein erstes und ein zweites Schaufelrad (3, 17), die jeweils von einem Luftstrom durchquert werden und direkt oder indirekt aneinander gekoppelt sind, wobei das erste Rad (3) eine erste Anzahl von Laufradschaufeln (31 bis 35) umfasst und das zweite Rad (17) eine zweite Anzahl von Laufradschaufeln (171 bis 177) umfasst,
**dadurch gekennzeichnet, dass** es ferner ein System zur Bestimmung der Winkelposition der Laufradschaufeln des ersten und zweiten Schaufelrades (3, 17) umfasst, wobei das System mindestens einen ersten Sensor (71) umfasst, der dem ersten Schaufelrad (3) zugeordnet ist, und mindestens einen zweiten Sensor (72), der dem zweiten Schaufelrad (17) zugeordnet ist, wobei die Sensoren (71, 72) jeweils ausgelegt sind, um ein Signal ($S_1$, $S_2$) bei jedem Passieren einer Laufradschaufel eines Schaufelrads vor dem Sensor zu erzeugen, und eine Verarbeitungseinheit (11), die ausgelegt ist, um das Zeitintervall zu bestimmen, das die Bestimmung einer Laufradschaufel (31 bis 35) des ersten Rades (3) von der Bestimmung von jeder der Laufradschaufeln (171 bis 177) des zweiten Rades (17) trennt,
wobei die erste Anzahl von Laufradschaufeln des ersten Rades (3) und die zweite Anzahl von Laufradschaufeln des zweiten Rades (17) untereinander verschieden und Primzahlen sind.

**7.** Turbotriebwerk (5) nach Anspruch 6, wobei das Bestimmungssystem mindestens zwei Sensoren bei jedem von dem ersten und zweiten Schaufelrad umfasst, wobei jedes der zwei Schaufelräder mindestens zwei unterschiedlichen Sensortypen zugeordnet ist, wobei der Sensortyp aus insbesondere dem optischen, magnetischen und kapazitiven Typ ausgewählt ist.

**8.** Turbotriebwerk (5) nach einem der Ansprüche 6 oder 7, wobei die erste Anzahl von Laufradschaufeln mindestens gleich zwei ist und die zweite Anzahl von Laufradschaufeln mindestens gleich drei ist.

9. Turbotriebwerk (5) nach einem der Ansprüche 6 bis 8, umfassend ein Zeitmodul, gemäß dem die Sensoren synchronisiert sind.

10. Turbotriebwerk (5) nach einem der Ansprüche 6 bis 9, wobei die Sensoren eine Frequenzbandbreite besitzen, die den Drehzahlen der Welle entspricht, für die die Laufradschaufeln ermittelt werden.

11. Luftfahrzeug, umfassend mindestens ein Turbotriebwerk (5) nach einem der Ansprüche 6 bis 10.

**Claims**

1. A method for detecting the angular positions of the blades of a rotor wheel of a turbine engine (5), the turbine engine (5) having at least two rotor wheels (3, 17) each having a stream of air passing therethrough and being coupled together directly or indirectly, the first wheel (3) having a first number of blades (31 to 35) regularly distributed around its circumference and the second wheel (17) having a second number of blades (171, 177) regularly distributed around its circumference,
   wherein the method comprises detecting (200) the passage of each blade (31 to 35) of the first wheel (3) past a first sensor (71), detecting (210) the passage of each blade (171 to 177) of the second wheel (17) past a second sensor (72), calculating (220) the time intervals between the passage of a blade of the first wheel (3) and the passages of each of the blades (171 to 177) of the second wheel (17), and determining (230) the relative angular position of each blade (31 to 35) of the first wheel (3) relative to the angular positions of the blades (171 to 177) of the second wheel (17), the first number of blades of the first wheel (3) and the second number of blades of the second wheel (17) being distinct and mutually prime.

2. The method according to claim 1, further comprising determining the speed of rotation of the shaft (19) or of the shafts (190, 195) driving the two rotor wheels (3, 17), the determination of the relative angular position taking into account the determined speed(s) of rotation.

3. The method according to claim 1 or 2, wherein the sensors are synchronized on a common time base.

4. The method according to any of claims 1 to 3, further comprising monitoring the twisting of the shaft, with determination of the relative angular position taking into account said determined twisting.

5. A method for detecting damage to one or more blades (31) constituting a rotor wheel (3) of an engine (5) of an aircraft, the method comprising detecting the angular positions of the blades of a rotor wheel in accordance with any of claims 1 to 4.

6. A turbine engine (5) comprising first and second rotor wheels (3, 17) through which a stream of air passes and coupled together directly or indirectly, the first wheel (3) having a first number of blades (31 to 35) and the second wheel having a second number of blades (171, 177),

   wherein the turbine engine further comprises a system for detecting the angular positions of the blades of the first and second rotor wheels (3, 17), the system comprising at least one first sensor (71) associated with the first rotor wheel (3) and at least one second sensor (72) associated with the second rotor wheel (17), each of said sensors (71, 72) being configured to generate a signal ($S_1$, $S_2$) each time a blade of a rotor wheel passes in front of the sensor, and a processor unit (11) configured to determine the time intervals between detecting a blade (31 to 35) of the first wheel (3) and detecting each of the blades (171 to 177) of the second wheel (17); the first number of blades of the first wheel (3) and the second number of blades of the second wheel (17) being distinct and mutually prime.

7. The turbine engine (5) according to claim 6, wherein the detection system comprises at least two sensors for each of the first and second rotor wheels, each of the two rotor wheels being associated with at least two different types of sensor, the type of sensor being selected in particular from the optical, magnetic, and capacitive types.

8. The turbine engine (5) according to claim 6 or 7, wherein the first number of blades is not less than two and the second number of blades is not less than three.

**9.** The turbine engine (5) according to any of claims 6 to 8, including a clock module on which the sensors are synchronized.

**10.** The turbine engine (5) according to any of claims 6 to 9, wherein the sensors possess a frequency passband corresponding to the speeds of rotation of the shaft for which the blades are detected.

**11.** An aircraft including at least one turbine engine (5) according to any of claims 6 to 10.

FIG.1

EP 3 578 929 B1

**FIG.2**

**200**

Détection des aubes de la première roue

**210**

Détection des aubes de la seconde roue

Calcul des intervalles de temps —**220**

Détermination de la position angulaire —**230**

Désignation d'une référence angulaire —**240**

# FIG.3

```
┌─────────────────────────┐
│   Mesure régime moteur   │─E1
└─────────────────────────┘
            │
            ▼
┌─────────────────────────┐
│      Acquisition TOA     │─E2
└─────────────────────────┘
            │
            ▼
┌─────────────────────────┐
│      Calcul déflexion    │─E3
└─────────────────────────┘
            │
            ▼
┌─────────────────────────┐
│   Extraction composante  │─E4
│        dynamique         │
└─────────────────────────┘
            │
            ▼
┌─────────────────────────┐
│ Sélection d'une plage de régime │─S
└─────────────────────────┘
            │
            ▼
┌─────────────────────────┐
│   Détermination variation │
│                          │─E5
└─────────────────────────┘
            │
            ▼
┌─────────────────────────┐
│       Comparaison        │─E6
└─────────────────────────┘
            │
            ▼
┌─────────────────────────┐
│      Identification      │─E7
└─────────────────────────┘
            │
            ▼
┌─────────────────────────┐
│         Alarme           │─E8
└─────────────────────────┘

┌ ─ ─ ─ ─ ─ ─ ─ ─ ─ ┐
│    Apprentissage    │
└ ─ ─ ─ ─ ─ ─ ─ ─ ─ ┘
          E9
```

FIG.4

## RÉFÉRENCES CITÉES DANS LA DESCRIPTION

**Documents brevets cités dans la description**

- US 2012148400 A
- EP 2661611 A
- US 8528317 B
- WO 2016062946 A1
- US 2012148400 A1
- EP 2781897 A2
- DE 102016219355 A1
- EP 1138952 A1
- DE 19818799 A1
- WO 0216881 A1